# EUROPÄISCHE PATENTSCHRIFT

(11) **EP 3 052 767 B1**
(45) Veröffentlichungstag und Bekanntmachung des Hinweises auf die Patenterteilung: **29.08.2018**
(21) Anmeldenummer: 14799979.1
(22) Anmeldetag: 10.11.2014
(51) Int. Cl.: F01D 11/04, F16J 15/34

(54) **DICHTSYSTEM FÜR EINE DAMPFTURBINE SOWIE DAMPFTURBINE**
SEALING SYSTEM FOR A STEAM TURBINE, AND STEAM TURBINE
SYSTÈME D'ÉTANCHÉITÉ POUR TURBINE À VAPEUR ET TURBINE À VAPEUR

(30) Priorität: 30.12.2013 DE 102013227208
(43) Veröffentlichungstag der Anmeldung: 10.08.2016
(73) Patentinhaber: Siemens Aktiengesellschaft, 80333 München (DE)
(72) Erfinder: GRUND, Christoph, 02827 Görlitz (DE); HAJE, Detlef, 02828 Görlitz (DE); NEUMANN, Lutz, 02826 Görlitz (DE); ZIEN, Martin, 02826 Görlitz (DE)
(86) Internationale Anmeldenummer: PCT/EP2014/074129
(87) Internationale Veröffentlichungsnummer: WO 2015/101437

(56) Entgegenhaltungen:
- EP-A1- 2 261 464
- CH-A- 225 023
- DE-A1- 1 817 012

## Beschreibung

Die vorliegende Erfindung betrifft ein Dichtsystem zum Abdichten eines Dichtspaltes zwischen einem Außengehäuse und einer Läuferwelle eines Läufers einer Dampfturbine. Ferner betrifft die Erfindung eine Dampfturbine.
Eine Dampfturbine weist ein Außengehäuse und einen Läufer auf, der in dem Außengehäuse drehbar gelagert ist. Beim Betrieb der Dampfturbine tritt in das Außengehäuse Dampf ein, dessen Enthalpie an einer Beschaufelung des Läufers abgebaut wird, so dass der Läufer drehangetrieben wird.
Der Läufer weist eine Läuferwelle auf, die an ihren Längsenden mit jeweils einem Lager gelagert ist, das in dem Außengehäuse vorgesehen ist. Da die Läuferwelle beim Betrieb der Dampfturbine relativ zu dem Außengehäuse sich bewegt, ist wenigstens ein Dichtspalt (Dichtspalt) zwischen der Läuferwelle und dem Außengehäuse vorgesehen, so dass die Läuferwelle an das Außengehäuse nicht anstreift. Durch den Dichtspalt stellt sich aufgrund des Überdrucks des Dampfs innerhalb der Dampfturbine eine Leckage an Dampf ein. Es wird angestrebt diesen Dichtspalt möglichst effektiv abzudichten, so dass die Leckage an Dampf durch diesen Dichtspalt möglichst gering ist. Das heißt, die erforderliche(n) Wellendichtung(en) muss so ausgeführt werden, dass kein Dampf nach außen entweicht und keine Luft in das Innere der Dampfturbine eindringen kann. Ein solches Dichtsystem ist aus der DE 18 17 012 bekannt. In Fig. 1 ist eine herkömmliche Dampfturbine 101 mit einem Außengehäuse 102, einem Läufer 103 und einer Läuferwelle 104 gezeigt. An einem Längsende der Läuferwelle 104 weist diese zwischen einem Lager und der Prozessseite der Dampfturbine 101 einen lagerseitigen Wellenabschnitt 105 und einen prozessseitigen Wellenabschnitt 106 auf. Der Übergang von dem lagerseitigen Wellenabschnitt 105 zu dem prozessseitigen Wellenabschnitt 106 ist von einer Wellenstufe 107 gebildet, wobei der lagerseitige Wellenabschnitt 105 einen kleineren Außendurchmesser hat als der prozessseitige Wellenabschnitt 106. Die Läuferwelle 104 durchdringt mit ihrem prozessseitigen Wellenabschnitt 106 das Außengehäuse 102, wodurch ein Dichtungsbereich 108 definiert ist. Der Dichtungsbereich 108 wird mittels einer Wellendichtung 109 abgedichtet, die ein lagerseitiges Labyrinth 110, ein prozessseitiges Labyrinth 111 und ein Zwischenlabyrinth 112 aufweist. Die Labyrinthe 110 bis 112 sind auf dem prozessseitigen Wellenabschnitt 106 vorgesehen.

Zwischen dem lagerseitigen Labyrinth 110 und dem Zwischenlabyrinth 112 ist in dem Außengehäuse 102 ein Kanal zum Abführen von Wrasendampf 114 vorgesehen, und zwischen dem Zwischenlaybrinth 112 und dem prozessseitigen Labyrinth 111 ist ein Kanal in dem Außengehäuse 102 zum Zuführen und/oder Abführen von Sperrdampf 113 vorgesehen. Die Labyrinthe 110 bis 112 sind beispielsweise als ein Durchblicklabyrinth, ein Volllabyrinth, ein Stufenlabyrinth, oder als ein Kamm-Nut-Labyrinth ausgeführt.

Alternativ zu Labyrinthdichtungen ist es bekannt Durchblickdichtungen bei Dampfturbinen einzusetzen. Sowohl Labyrinthdichtungen als auch Durchblickdichtungen erfordern jedoch aufgrund der anfallenden Leckagemengen ein kostenintensives Leck- und Sperrdampfsystem.

Demzufolge ist es die Aufgabe der vorliegenden Erfindung die voranstehend beschriebenen Nachteile bei der Abdichtung eines Außengehäuses zu der Läuferwelle eines Läufers einer Dampfturbine zumindest teilweise zu beheben. Insbesondere soll eine Abdichtung eines Außengehäuses zu der Läuferwelle eines Läufers einer Dampfturbine geschaffen werden, durch das ein kostenintensives Leck- und Sperrdampfsystem eingespart werden kann.

Die voranstehende Aufgabe wird gelöst durch Dichtsystem mit den Merkmalen gemäß Anspruch 1 sowie durch eine Dampfturbine mit den Merkmalen gemäß Anspruch 8. Weitere Merkmale und Details der Erfindung ergeben sich aus den Unteransprüchen, der Beschreibung und den Zeichnungen. Dabei gelten Merkmale und Details, die im Zusammenhang mit dem Dichtsystem beschrieben sind, selbstverständlich auch im Zusammenhang mit der erfindungsgemäßen Dampfturbine und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch ein Dichtsystem zum Abdichten eines Dichtspaltes zwischen einem Außengehäuse und einer Läuferwelle eines Läufers einer Dampfturbine gelöst. Das Dichtsystem weist eine Sperrmediumwandung zur Erzeugung eines Sperrmediumraumes zwischen der Läuferwelle und dem Außengehäuse im Bereich vor und/oder in dem Dichtspalt auf, wobei die Sperrmediumwandung an dem Außengehäuses befestigbar ist. Ferner weist das Dichtsystem eine Sperrmediumöffnung in der Sperrmediumwandung zur Zuführung von Sperrmedium von außen in den Sperrmediumraum auf. Ebenso weist das Dichtsystem eine Wellendichtung, insbesondere eine Labyrinth- oder Durchblickdichtung, zur Abdichtung des Sperrmediumraumes gegenüber einem zweiten Raum, in dem ein zum ersten Druck kleinerer zweiter Druck vorherrscht, und eine Gleitringdichtung zur Abdichtung des Sperrmediumraumes gegenüber einem dritten Raum, in dem ein zum zweiten Druck kleinerer dritter Druck vorherrscht.

Das Sperrmedium kann beispielsweise Luft, Dampf, Gas, organisches Medium, etc. sein. Insbesondere ist das Sperrmedium das Betriebsmedium der Dampfturbine. Die Dampfturbine kann im Sinne der Erfindung auch eine Kondensationsturbine sein.

Ein derartiges Dichtsystem ermöglicht, dass in dem Sperrmediumraum ein Sperrmedium mit einem ersten Druck eingefüllt werden kann, der geringfügig höher ist, als der höchste Druck eines der zu dem Sperrmediumraum abgedichteten benachbarten Räume. Als benachbarter Raum kann beispielsweise die Umgebung außerhalb des Außengehäuses der Dampfturbine oder der Prozessraum in der Dampfturbine gelten. Das Dichtsystem ist derart ausgebildet, dass die Gleichringdichtung des Dichtsystems zur Abdichtung des Sperrmediumraumes zu dem Raum genutzt wird, in dem der kleinere Druck vorherrscht. Das bedeutet, liegt in dem zweiten Raum ein kleinerer Druck vor, als in dem dritten Raum, so wird die Gleitringdichtung zur Abdichtung gegenüber diesem Raum eingesetzt. Die Wellendichtung wird dann zur Abdichtung gegenüber dem dritten Raum eingesetzt, zu dem die Druckdifferenz von dem ersten Druck in dem Sperrmediumraum größer ist, als zu dem zweiten Raum. Herrscht beispielsweise in dem Prozessraum der Dampfturbine ein höherer Druck vor, als in der Umgebung außerhalb des Außengehäuses der Dampfturbine, so wird in den Sperrmediumraum ein Sperrmedium mit einem ersten Druck eingefüllt, der geringfügig größer ist, als der Druck in dem Prozessraum. Die Abdichtung des Dichtspaltes zwischen dem Sperrmediumraum und dem Prozessraum erfolgt dann mit der Wellendichtung, da die Druckdifferenz zwischen diesen beiden Räumen gering ist. In dem Dichtspalt zwischen dem Außengehäuse und der Läuferwelle der den Sperrmediumraum und die Umgebung trennt, wird die Gleitringdichtung eingesetzt, die diese die höhere Druckdifferenz zwischen dem Sperrmediumraum und der Umgebung besser abdichtet.

Ist die Dampfturbine eine Kondensationsturbine, so kann in dem Prozessraum der Kondensationsturbine ein Unterdruck vorliegen, der geringer ist, als der Umgebungsdruck. So wird in den Sperrmediumraum ein Sperrmedium mit einem ersten Druck eingefüllt, der geringfügig größer ist, als der Druck in der Umgebung. Die Abdichtung des Dichtspaltes zwischen dem Sperrmediumraum und der Umgebung erfolgt dann mittels der Wellendichtung, während die Abdichtung des Dichtspaltes zwischen dem Sperrmediumraum und dem Prozessraum durch die Gleitringdichtung erfolgt.
Das Dichtsystem ist vorteilhafterweise flexibel ausgebildet, so dass je nach vorherrschenden Drücken innerhalb der Dampfturbine und außerhalb des Außengehäuses der Dampfturbine, die Anordnung der Gleitringdichtung in dem Dichtspalt zwischen dem Sperrmediumraum und dem Prozessraum oder in dem Dichtspalt zwischen dem Sperrmediumraum und der Umgebung erfolgen kann. Die Wellendichtung wird dann entsprechend zur Abdichtung des jeweils anderen Dichtspaltes eingesetzt. Entscheidend bei dem Dichtsystem ist, dass in den Sperrmediumraum immer Sperrmedium mit einem geringfügig höheren Druck eingefüllt ist, als der größere Druck in den beiden angrenzenden Räumen.

Ein derartiges Dichtsystem ermöglicht den Einsatz wenigstens einer Gleitringdichtung zur Abdichtung eines Dichtspaltes zwischen dem Außengehäuse und einer Läuferwelle eines Läufers einer Dampfturbine, das heißt zur Abdichtung des Prozessraums der Dampfturbine zur Umgebung. Dies wird ermöglicht durch die Ausbildung eines Sperrmediumraumes zwischen der Läuferwelle und dem Außengehäuse im Bereich vor und/oder in dem Dichtspalt. Je nachdem, ob die entsprechend eingesetzte Dichtung unmittelbar vor dem Dichtspalt zwischen dem Außengehäuse und der Läuferwelle oder in dem Dichtspalt zwischen dem Außengehäuse und der Läuferwelle angeordnet ist, erstreckt sich der Sperrmediumraum bis kurz vor den Dichtspalt oder bis in den Dichtspalt hinein. Der Einsatz wenigstens einer Gleitringdichtung erspart ein kostenintensives Leck- und Sperrdampfsystem, wie es bei anderen Wellendichtungen, wie Labyrinthdichtungen oder Durchblickdichtungen, erforderlich ist. Gleitringdichtungen erfordern ein möglichst reines Medium im abzudichtenden Dichtspaltzwischen dem Außengehäuse und der Läuferwelle beziehungsweise der Sperrmediumwandung und der Läuferwelle. Die Zuführung von reinem Sperrmediumzu der Gleitringdichtung wird durch den Sperrmediumraum, der durch die Sperrmediumwandung in Verbindung mit dem Außengehäuse und der Läuferwelle gebildet wird, ermöglicht.

Die Sperrmediumwandung eines Dichtsystems wird an dem Außengehäuse abdichtend befestigt. Ferner sorgt die Wellendichtung, insbesondere eine Labyrinth- oder Durchblickdichtung, dafür, dass auch der zweite Dichtspalt zur Läuferwelle sehr gut abgedichtet ist. Über die Sperrmediumöffnung in der Sperrmediumwandung ist eine Zuführung von Sperrmedium, d.h. beispielsweise gereinigte Umgebungsluft oder gereinigter Dampf, von außen, das heißt aus der Umgebung oder aus dem Prozessraum, in den Sperrmediumraum möglich, so dass die Gleitringdichtung nur in Kontakt mit dem gereinigten Sperrmedium gelangt.

Um beispielsweise nicht den gesamten Dampf, der in die Dampfturbine gelangt, filtern zu müssen, kann beispielsweise eine kleine Menge Dampf, sogenannter Bypassdampf, vom Zudampfstrom zur Dampfturbine abgezweigt werden, anschließend in einer Reinigungsvorrichtung, wie einem Filter, gereinigt werden, um dann vor die Gleitringdichtung des entsprechenden Dichtsystems geführt zu werden. Hierdurch wird sichergestellt, dass die Gleitringdichtung des Dichtsystems nicht durch Schmutzpartikel im Dampf beschädigt wird. Der gereinigte Dampf kann auch dafür genutzt werden, dass die Gleitringdichtung im gesamten Betriebsbereich nur in eine Richtung dichten muss. Hierfür wird das gereinigte Sperrmedium mit einem ersten Druck in den Sperrmediumraum eingebracht, der geringfügig höher ist, als der höhere der beiden Drücke in dem durch das Dichtsystem abgegrenzten zweiten oder dritten Raum.

Ein erfindungsgemäßes Dichtsystem verhindert auf einfache Art und Weise, dass Beschädigungen an der Gleitringdichtung auftreten. Durch die Verwendung von gereinigtem Sperrmedium, wie beispielsweise Bypassdampf, kann sichergestellt werden, dass das Druckgefälle über die Gleitringdichtung immer in dieselbe Richtung weist.

Gemäß einer bevorzugten Weiterentwicklung kann bei einem Dichtsystem vorgesehen sein, dass der Sperrmediumraum ausgebildet ist einen Druck aufzunehmen, der höher als der Druck in dem zweiten und dem dritten Raum ist

Gemäß einer bevorzugten Weiterentwicklung kann bei einem Dichtsystem vorgesehen sein, dass die Gleitringdichtung an der der Läuferwelle zugewandten Seite der Sperrmediumwandung und der Läuferwelle anordenbar ist. Die Sperrmediumwandung wird vorzugsweise derart an dem Außengehäuse angeordnet, dass diese im Bereich des Dichtspaltes zwischen dem Außengehäuse und der Läuferwelle parallel zu der Läuferwelle verläuft. An dieser parallel zur Läuferwelle verlaufenden Seite der Sperrmediumwandung wird die Gleitringdichtung beziehungsweise ein Teil der Gleitringdichtung befestigt. Der weitere Teil der Gleitringdichtung wird zur Bildung der Gleitringdichtung an der Läuferwelle befestigt.

Die Gleitringdichtung weist vorzugsweise einen Gleitring und einen Gegenring auf. Einer der beiden Ringe wird an dem Außengehäuse, insbesondere der Sperrmediumwandung, befestigt. Der zweite Ring wird gegenüber dem ersten Ring an der Läuferwelle befestigt. Beispielsweise können der Gleitring befedert an dem Außengehäuse beziehungsweise der Sperrmediumwandung und der Gegenring an der Läuferwelle befestigt werden. Die Befestigung des Gegenrings an der Läuferwelle kann beispielsweise mithilfe von Verdrehsicherungsstiften erfolgen. Die beiden Ringe weisen plane, parallel zueinander verlaufende Oberflächen auf. Die Oberflächen der Ringe können parallel zur Längsachse der Läuferwelle verlaufen. Die Ringe der Gleitringdichtung können aber auch derart angeordnet sein, dass die Oberflächen der Ringe senkrecht zur Längsachse der Läuferwelle verlaufen.

Die Ringe beziehungsweise zumindest die Oberflächen der Ringe können beispielweise aus Kohlenstoff-Graphitwerkstoffen, Metall, Keramik, Kunststoff oder kunstharzgebundenem Kohlenstoff ausgebildet sein. Eine mögliche Kombination der Gleitringdichtung wäre beispielsweise als Gleitring ein Kohlering gegen einen Gegenring aus Siliziumcarbid.

Bevorzugt kann bei einem Dichtsystem vorgesehen sein, dass an der Sperrmediumöffnung eine Sperrmediumleitung zur fluidkommunizierenden Verbindung des Sperrmediumraumes mit einer Reinigungsvorrichtung des Dichtsystems, in der Sperrmedium, insbesondere gereinigte Luft oder gereinigter Dampf, bereitgestellt wird, anordnet ist. Die Sperrmediumleitung kann flexibel oder starr ausgebildet sein. Eine Reinigungsvorrichtung eines ersten Dichtsystems kann beispielsweise zur Reinigung von Umgebungsluft ausgebildet sein. Eine Reinigungsvorrichtung eines zweiten Dichtsystems kann beispielsweise zur Reinigung von Dampf aus dem Prozessraum ausgebildet sein. Das heißt, liegt der Sperrmediumraum außerhalb des Prozessraumes kann geeinigte Umgebungsluft dem Sperrmediumraum des entsprechenden Dichtsystems zugeführt werden, liegt der Sperrmediumraum innerhalb des Prozessraumes kann geeinigter Dampf dem Sperrmediumraum des entsprechenden Dichtsystems zugeführt werden.

Ferner kann bei einem Dichtsystem vorgesehen sein, dass in der Sperrmediumöffnung oder in der Sperrmediumleitung ein Sperrmediumventil angeordnet ist. Dies ermöglicht neben der Dosierung der dem Sperrmediumraum zugeführten Sperrmedium auch eine Druckeinstellung des Sperrmediums innerhalb des Sperrmediumraumes.

Bei einem Dichtsystem kann die Sperrmediumwandung zweiteilig oder mehrteilig ausgebildet ist, wobei alle Sperrmediumwandungen abdichtend aneinander befestigbar sind. Ein Teil der Sperrmediumwandung kann an dem Außengehäuse abdichtend fixiert werden. Die Sperrmediumwandung beziehungsweise ein erster Teil der Sperrmediumwandung kann insbesondere kraftschlüssig, beispielsweise über Schraubverbindungen, an dem Außengehäuse abdichtend fixiert werden.

Ferner kann bei einem Dichtsystem vorgesehen sein, dass an einer ersten Sperrmediumwandung die Wellendichtung angeordnet ist und dass an der zweiten Sperrmediumwandung entweder der Gleitring oder der Gegenring der Gleitringdichtung befestigt ist. Eine derartige Anordnung ermöglicht eine gute Abdichtung der Umgebung zum Prozessraum einer Dampfturbine beziehungsweise des Prozessraums zu der Umgebung. Alternativ dazu kann die Wellendichtung zusätzlich oder nur an der Läuferwelle befestigt werden. Ebenso ist denkbar, dass der Gleitring an der Läuferwelle und der Gegenring der Gleitringdichtung an dem Außengehäuse beziehungsweise der Sperrmediumwandung angeordnet werden.

Gemäß einem zweiten Aspekt der Erfindung wird die Aufgabe durch eine Dampfturbine mit einem Außengehäuse und einem Läufer mit einer Läuferwelle, mit wenigstens einem Dichtspalt zwischen dem Außengehäuse und der Läuferwelle, gelöst. Die Dampfturbine ist dadurch gekennzeichnet, dass diese zumindest ein Dichtsystem gemäß dem ersten Aspekt der Erfindung, insbesondere gemäß einen der Ansprüche 1 bis 7, zur Abdichtung des wenigstens einen Dichtspalts zwischen dem Außengehäuse und der Läuferwelle aufweist. Die Dampfturbine kann im Sinne der Erfindung eine Kondensationsturbine sein.

Eine derartige Dampfturbine stellt in konstruktiv einfacher und kostengünstiger Art und Weise sicher, dass der Prozessraum der Dampfturbine sowohl gegen austretenden Dampf als auch gegen eintretende Luft sicher geschützt ist.

Zur Abdichtung der Dampfturbine gegen austretenden Dampf kann beispielsweise vorgesehen sein, dass eine kleine Menge Dampf aus dem Prozessraum der Dampfturbine vom Zudampfstrom abgezweigt wird, in einer Reinigungsvorrichtung gereinigt wird und anschließend dem Sperrmediumraum vor der Gleitringdichtung innerhalb des Prozessraumes der Dampfturbine zugeführt wird. Das heißt, es reicht aus, wenn nur eine kleine Menge an Dampf gereinigt und dem entsprechenden Dichtsystem innerhalb des Prozessraums zugeführt wird. Dieser gereinigte Dampf kann auch dafür genutzt werden, dass die Gleitringdichtung im gesamten Betriebsbereich nur in eine Richtung dichten muss. Hierzu wird der gereinigte Dampf mit einem höheren Druck in den Sperrmediumraum eingebracht, als der Druck in den abgetrennten Räumen.

Zur Abdichtung der Dampfturbine gegen eintretende Luft kann beispielsweise gereinigte Umgebungsluft dem Dichtsystem, das heißt dem Sperrmediumraum vor der Gleitringdichtung außerhalb des Prozessraumes der Dampfturbine zugeführt werden. Das heißt, von außen wird vor die Gleitringdichtung in den Sperrmediumraum gereinigte Luft mit ausreichender Reinheit geführt. Hierdurch wird sichergestellt, dass die Gleitringdichtung nicht durch Schmutzpartikel beschädigt wird.

Bevorzugt ist entsprechend eine Dampfturbine mit wenigstens zwei erfindungsgemäßen Dichtsystemen. Ein erstes Dichtsystem sitzt außerhalb des Prozess- oder Dampfraumes der Dampfturbine, ein zweites Dichtsystem sitzt innerhalb des Prozess- oder Dampfraumes der Dampfturbine. Bei beiden Dichtsystemen wird mittels einer Sperrraumwandung ein Sperrmediumraum vor der jeweiligen Gleitringdichtung erzeugt. In den Sperrmediumraum des ersten Dichtsystems kann beispielsweise durch eine Sperrraumöffnung in der Sperrraumwandung gereinigte Umgebungsluft eingeführt werden, in den Sperrmediumraum des zweiten Dichtsystems kann beispielsweise durch eine Sperrraumöffnung in der Sperrraumwandung gereinigter Dampf eingeführt werden. Durch die gereinigte Umgebungsluft beziehungsweise den gereinigten Dampf ist jeweils einfach und kostengünstig sichergestellt, dass die entsprechenden Gleitringdichtungen nicht durch Verunreinigungen in der Umgebungsluft beziehungsweise im Dampf beschädigt werden. Vorteilhaft ist daher eine Dampfturbine die zwei Reinigungsvorrichtung für Sperrmedium, beispielsweise eine Reinigungsvorrichtung zur Reinigung von Umgebungsluft und eine Reinigungsvorrichtung zur Reinigung von Dampf aufweist.

Bevorzugt ist ferner eine Dampfturbine, bei der das Außengehäuse Befestigungseinrichtungen zum Befestigen der Sperrmediumwandung des zumindest einen Dichtsystems aufweist.

Die Sperrmediumwandung eines Dichtsystems ist vorzugsweise an der der Läuferwelle zugewandten Seite, der sogenannten Stirnseite, des Außengehäuses abdichtend angeordnet. Sie kann aber auch an der Seite des Außengehäuses abdichtend angeordnet sein.

Gemäß einer bevorzugten Weiterentwicklung der Erfindung kann bei einer Dampfturbine vorgesehen sein, dass die Wellendichtung den Sperrmediumraum gegenüber einem zweiten Raum, in dem ein zum ersten Druck kleinerer zweiter Druck vorherrscht, abdichtet und dass die Gleitringdichtung den Sperrmediumraum gegenüber einem dritten Raum, in dem ein zum zweiten Druck kleinerer dritter Druck vorherrscht, abdichtet.

Die Dampfturbine weist vorzugsweise Pumpen auf, die zur Erhöhung des Drucks auf das Sperrmedium ausgebildet sind.

Bei einer Dampfturbine kann ferner vorgesehen sein, dass der Gleitring der zumindest einen Gleitringdichtung an der zur Läuferwelle zugewandten Seite der Sperrmediumwandung und der Gegenring der zumindest einen Gleitringdichtung an der Läuferwelle befestigt sind.

Sämtliche Vorteile, die zu dem Dichtsystem gemäß dem ersten Aspekt der Erfindung beschrieben worden sind, gelten dementsprechend ebenso für die Dampfturbine.

Eine erfindungsgemäße Dampfturbine sowie ein erfindungsgemäßes Dichtsystem werden nachfolgend anhand von Zeichnungen näher erläutert. Es zeigen jeweils schematisch:
- Figur 1: einen Längsschnitt im Wellenbereich einer Dampfturbine gemäß dem Stand der Technik,
- Figur 2: einen Längsschnitt durch einen ersten Wellenbereich einer erfindungsgemäßen Dampfturbine, und
- Figur 3: einen Längsschnitt durch einen zweiten Wellenbereich einer erfindungsgemäßen Dampfturbine.

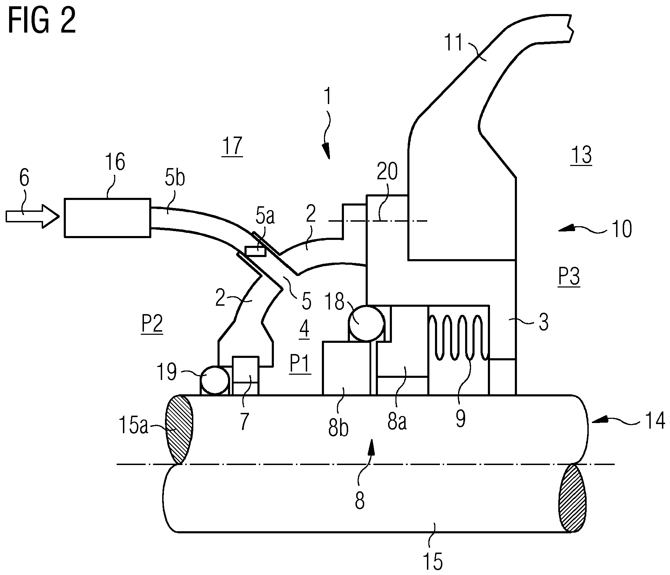

Elemente mit gleicher Funktion und Wirkungsweise sind in den Figuren 2 bis 3 jeweils mit denselben Bezugszeichen versehen.

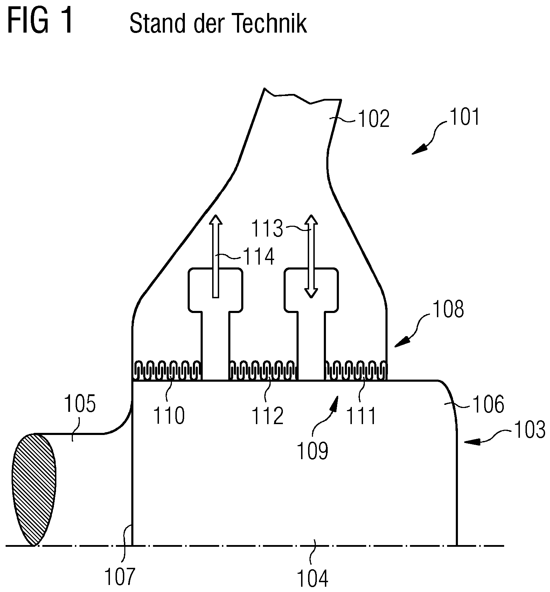

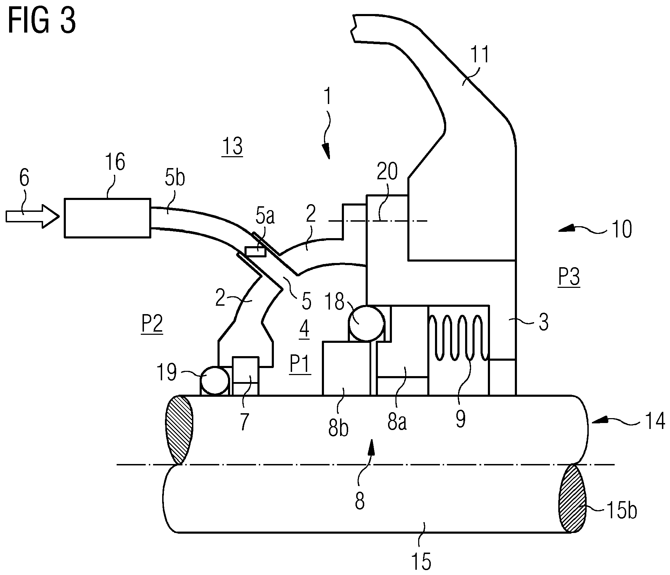

Die Fig. 2 und 3 zeigen jeweils schematisch in einen Längsschnitt den Wellenbereich einer erfindungsgemäßen Dampfturbine 10. In Fig. 1 ist ein Dichtsystem 1 gezeigt, welches den Prozessraum 13 der Dampfturbine 10 gegen eintretende Umgebungsluft abdichtet. In Fig. 3 ist ein Dichtsystem 1 gezeigt, welches den Prozessraum 13 der Dampfturbine 10 gegen austretenden Dampf aus dem Prozessraum 13 abdichtet.

Jedes Dichtsystem 1 ist zum Abdichten eines Dichtspaltes 12 zwischen dem Außengehäuse 11 und der Läuferwelle 15 des Läufers 14 der Dampfturbine 10 ausgebildet.

Das Dichtsystem 1 in Fig. 2 weist eine zweiteilige Sperrmediumwandung 2, 3 zur Erzeugung eines Sperrmediumraumes 4 zwischen der Läuferwelle 15 und dem Außengehäuse 11 der Dampfturbine 10 im umgebungsseitigen Bereich vor beziehungsweise in dem Dichtspalt 12 auf. Ein zweiter Teil der Sperrmediumwandung 3 ist über eine kraftschlüssige Verbindung 20, beispielsweise eine Schraubverbindung, an dem Außengehäuse 11 der Dampfturbine 10 befestigt. In der Sperrmediumwandung 2, 3, hier in dem ersten Teil der Sperrmediumwandung 2, ist eine Sperrmediumöffnung 5 zur Zuführung von gereinigte Sperrmedium 6 mit ein ersten Druck P1 von außen über die Sperrmediumleitung 5b in den Sperrmediumraum 4 vorgesehen. Die Sperrmedium 6 wird mit einem derart hohen ersten Druck P1 in den Sperrmediumraum 4 gepumpt, dass der erste Druck P1 in dem Sperrmediumraum 4 sowohl größer als der zweite Druck P2 der Umgebung, als auch größer als der dritte Druck P3 in dem Prozessraum 13 innerhalb der Dampfturbine 10 ist. Zur Regelung des Zulaufs des Sperrmediums 6 in den Sperrmediumraum 4 und des ersten Drucks P1 in dem Sperrmediumraum 4 ist ein Sperrmediumventil 5a in der Sperrmediumleitung 5b angeordnet. Ferner kann eine nicht dargestellte Pumpe zur Erzeugung des ersten Drucks P1 des Sperrmediums 6 vorgesehen sein. Zur Reinigung des Sperrmediums 6, hier der Umgebungsluft, ist eine Reinigungsvorrichtung 16, beispielsweise ein Luftfilter, vorgesehen. Das Dichtsystem 1 weist ferner eine Wellendichtung 7, insbesondere eine Labyrinth- oder Durchblickdichtung, auf, die zur Abdichtung der Sperrmediumwandung 2 und der Läuferwelle 15 zwischen dem Sperrmediumraum 4 und der Umgebung 17 dient. Des Weiteren weist das Dichtsystem 1 eine Gleitringdichtung 8 zur Abdichtung des Dichtspalts 12 zwischen dem Außengehäuse 11 und der Läuferwelle 15 zwischen dem Sperrmediumraum 4 und dem Prozessraum 13 auf. Der zweite Druck P2, das heißt der Druck in der Umgebung, ist in diesem Fall höher als der dritte Druck P3, hier der Druck in dem Prozessraum 13. Das bedeutet, da das Sperrmedium 6 mit einem ersten Druck P1 in den Sperrmediumraum 4 eingebracht wird, der sowohl höher als der zweite Druck P2 als auch höher als der dritten Druck P3 ist, herrscht zwischen dem Prozessraum 13 und dem Sperrmediumraum 4 eine größere Druckdifferenz, als zwischen dem Sperrmediumraum 4 und der Umgebung 17. Deshalb ist die Gleitringdichtung 8 zwischen dem Prozessraum 13 und dem Sperrmediumraum 4 angeordnet. Die Wellendichtung 7 dichtet den zweiten Dichtspalt zwischen dem Sperrmediumraum 4 und der Umgebung 17 ab, da in diesem Dichtspalt aufgrund des Anlegens eines zum zweiten Drucks P2 geringfügig höheren ersten Drucks P1 dort lediglich eine geringe Druckdifferenz vorliegt.

Die Gleitringdichtung 8 weist einen Gleitring 8a und einen Gegenring 8b auf. Der Gleitring ist an der der Läuferwelle 15 zugewandten Seite der Sperrmediumwandung 3 angeordnet, währenddessen der Gegenring 8a an der Läuferwelle 15 befestigt ist. Zur zusätzlichen Abdichtung kann vor der Gleitringdichtung 8 in Richtung des Sperrmediumraumes 4 eine Nebendichtung 18, beispielsweise in Form eines O-Rings, angeordnet sein. Ebenso kann der Gleitringdichtung 8 nachgeordnet, in Richtung des Prozessraums 13 eine weitere Wellendichtung, beispielsweise ein Durchblick- oder Labyrinthdichtung, angeordnet sein. Ferner kann vor der Wellendichtung 7 eine zusätzliche Nebendichtung 19, beispielsweise in Form eines O-Rings, vorgesehen sein.

Das in Fig. 2 dargestellte Dichtsystem 1 ermöglicht, dass der Gleitringdichtung 8 nur gereinigtes Sperrmedium 6, insbesondere gereinigte Umgebungsluft, mit einem bestimmten ersten Druck P1 zugeführt wird. Hierdurch wird verhindert, dass Schmutz zu der Gleitringdichtung 8 gelangen kann. Das Dichtsystem 1 ermöglicht somit erst den Einsatz einer Gleitringdichtung 8 zur Abdichtung des Außengehäuses 11 zur Läuferwelle 15 der Dampfturbine 10.

In Fig. 3 ist ein zur Fig. 2 gleiches Dichtsystem 1 gezeigt. Dieses Dichtsystem 1 ist jedoch innerhalb des Prozessraums 13 der Dampfturbine 10 angeordnet und verhindert, dass Dampf aus dem Prozessraum 13 durch das Außengehäuse 11 austritt. Es wird Dampf als Sperrmedium 6 aus dem Prozessraum 13 abgezweigt, in der Reinigungsvorrichtung 16 gereinigt und über die Sperrmediumleitung 5b und die Sperrmediumöffnung 5 dem Sperrmediumraum 4 dieses Dichtsystems 1 zugeführt. Hierdurch ist sichergestellt, dass nur gereinigtes Sperrmedium 6, insbesondere gereinigter Dampf, der Gleitringdichtung 8 dieses Dichtsystems 1 zugeführt wird, wodurch die Funktionsfähigkeit der Gleitringdichtung 8 deutlich verbessert wird.

## Patentansprüche

1. Dichtsystem (1) zum Abdichten eines Dichtspaltes (12) zwischen einem Außengehäuse (11) und einer Läuferwelle (15) eines Läufers (14) einer Dampfturbine (10), aufweisend eine Sperrmediumwandung (2, 3) zur Erzeugung eines Sperrmediumraumes (4) zwischen der Läuferwelle (15) und dem Außengehäuse (11) im Bereich vor und/oder in dem Dichtspalt (12), wobei die Sperrmediumwandung (2, 3) an dem Außengehäuses (11) befestigbar ist, aufweisend eine Sperrmediumöffnung (5) in der Sperrmediumwandung (2, 3) zur Zuführung von gereinigtem Sperrmedium (6) von außen in den Sperrmediumraum (4) mit einem ersten Druck (P1), aufweisend eine Wellendichtung (7) zur Abdichtung des Sperrmediumraumes (4) gegenüber einem zweiten Raum (13, 17), in dem ein zum ersten Druck (P1) kleinerer zweiter Druck (P2) vorherrscht, und eine Gleitringdichtung (8) zur Abdichtung des Sperrmediumraumes (4) gegenüber einem dritten Raum (13, 17), in dem ein zum zweiten Druck (P2) kleinerer dritter Druck (P3) vorherrscht, wobei an der Sperrmediumöffnung (5) eine Sperrmediumleitung (5b) zur fluidkommunizierenden Verbindung des Sperrmediumraumes (4) mit einer Reinigungsvorrichtung (16) des Dichtsystems (1), in der das gereinigte Sperrmedium (6) bereitgestellt wird, angeordnet ist.

2. Dichtsystem (1) gemäß Anspruch 1,
**dadurch gekennzeichnet, dass** die Gleitringdichtung (8) an der der Läuferwelle (15) zugewandten Seite der Sperrmediumwandung (2, 3) und der Läuferwelle (15) anordenbar ist.

3. Dichtsystem (1) gemäß einem der Ansprüche 1 oder 2,
**dadurch gekennzeichnet, dass** die Gleitringdichtung (8) einen Gleitring (8a) und einen Gegenring (8b) aufweist.

4. Dichtsystem (1) gemäß einem der vorangegangenen Ansprüche,
**dadurch gekennzeichnet, dass** in der Sperrmediumöffnung (5) oder in der Sperrmediumleitung (5b) ein Sperrmediumventil (5a) angeordnet ist.

5. Dichtsystem (1) gemäß einem der vorangegangenen Ansprüche,
**dadurch gekennzeichnet, dass** die Sperrmediumwandung (2, 3) zweiteilig ausgebildet ist, wobei beide Sperrmediumwandungen (2,3) abdichtend einander befestigbar sind.

6. Dichtsystem (1) gemäß Anspruch 5,
**dadurch gekennzeichnet, dass** an einer ersten Sperrmediumwandung (2) die Wellendichtung (7) angeordnet ist und dass an der zweiten Sperrmediumwandung (3) entweder der Gleitring (8a) oder der Gegenring (8b) der Gleitringdichtung (8) befestigt ist.

7. Dampfturbine (10) mit einem Außengehäuse (11) und einem Läufer (14) mit einer Läuferwelle (15), mit wenigstens einem Dichtspalt (12) zwischen dem Außengehäuse (11) und der Läuferwelle (15),
**dadurch gekennzeichnet, dass** die Dampfturbine (1) zumindest ein Dichtsystem (1) gemäß einen der vorhergehenden Ansprüche zur Abdichtung des wenigstens einen Dichtspalts (12) aufweist.

8. Dampfturbine (10) gemäß Anspruch 7,
**dadurch gekennzeichnet, dass** das Außengehäuse (11) Befestigungseinrichtungen zum Befestigen der Sperrmediumwandung (2, 3) des zumindest einen Dichtsystems (1) aufweist.

9. Dampfturbine (10) gemäß Anspruch 7 oder 8,
**dadurch gekennzeichnet, dass** die Sperrmediumwandung (2, 3) an der der Läuferwelle (15) zugewandten Seite des Außengehäuses (11) abdichtend angeordnet ist.

10. Dampfturbine (10) gemäß Anspruch 7 bis 9,
**dadurch gekennzeichnet, dass** die Wellendichtung (7) den Sperrmediumraum (4) gegenüber einem zweiten Raum (13, 17), in dem ein zum ersten Druck (P1) kleinerer zweiter Druck (P2) vorherrscht, abdichtet und dass die Gleitringdichtung (8) den Sperrmediumraum (4) gegenüber einem dritten Raum (13, 17), in dem ein zum zweiten Druck (P2) kleinerer dritter Druck (P3) vorherrscht, abdichtet.

11. Dampfturbine (10) gemäß Anspruch 7 bis 10,
**dadurch gekennzeichnet, dass** der Gleitring (8a) der Gleitringdichtung (8) an der zur Läuferwelle (15) zugewandten Seite der Sperrmediumwandung (2, 3) und der Gegenring (8b) der Gleitringdichtung (8) an der Läuferwelle (15) befestigt sind.

## Claims

1. Sealing system (1) for sealing a sealing gap (12) between an outer casing (11) and a rotor shaft (15) of a rotor (14) of a steam turbine (10), having a barrier medium wall (2, 3) to create a barrier medium space (4) between the rotor shaft (15) and the outer casing (11) in the region in front of and/or in the sealing gap (12), wherein the barrier medium wall (2, 3) can be attached to the outer casing (11), having a barrier medium opening (5) in the barrier medium wall (2, 3) for supplying purified barrier medium (6) from outside into the barrier medium space (4) at a first pressure (P1), having a shaft seal (7) for sealing the barrier medium space (4) with respect to a second space (13, 17) in which a second pressure (P2), smaller than the first pressure (P1), prevails, and a floating ring seal (8) for sealing the barrier medium space (4) with respect to a third space (13, 17) in which a third pressure (P3), smaller than the second pressure (P2), prevails, wherein, at the barrier medium opening (5), there is arranged a barrier medium line (5b) for fluidically connecting the barrier medium space (4) to a purification device (16) of the sealing system (1) which prepares the purified barrier medium (6).

2. Sealing system (1) according to Claim 1,
**characterized in that** the floating ring seal (8) can be arranged on that side of the barrier medium wall (2, 3) which is oriented toward the rotor shaft (15), and on the rotor shaft (15).

3. Sealing system (1) according to either of Claims 1 and 2,
**characterized in that** the floating ring seal (8) has a floating ring (8a) and a support ring (8b).

4. Sealing system (1) according to one of the preceding claims, **characterized in that** a barrier medium valve (5a) is arranged in the barrier medium opening (5) or in the barrier medium line (5b).

5. Sealing system (1) according to one of the preceding claims, **characterized in that** the barrier medium wall (2, 3) is formed in two parts, wherein the two barrier medium walls (2, 3) can be attached to one another in a sealing fashion.

6. Sealing system (1) according to claim 5, **characterized in that** the shaft seal (7) is arranged on a first barrier medium wall (2) and **in that** either the floating ring (8a) or the support ring (8b) of the floating ring seal (8) is attached to the second barrier medium wall (3).

7. Steam turbine (10) having an outer casing (11) and a rotor (14) with a rotor shaft (15), having at least one sealing gap (12) between the outer casing (11) and the rotor shaft (15),
**characterized in that** the steam turbine (10) has at least one sealing system (1) according to one of the preceding claims for sealing the at least one sealing gap (12).

8. Steam turbine (10) according to Claim 7,
**characterized in that** the outer casing (11) has attachment devices for attaching the barrier medium wall (2, 3) of the at least one sealing system (1).

9. Steam turbine (10) according to Claim 7 or 8,
**characterized in that** the barrier medium wall (2, 3) is arranged in sealing fashion on that side, of the outer casing (11), which is oriented toward the rotor shaft (15) .

10. Steam turbine (10) according to Claims 7 to 9,
**characterized in that** the shaft seal (7) seals the barrier medium space (4) with respect to a second space (13, 17) in which a second pressure (P2), lower than the first pressure (P1), prevails, and **in that** the floating ring seal (8) seals the barrier medium space (4) with respect to a third space (13, 17) in which a third pressure (P3), lower than the second pressure (P2), prevails.

11. Steam turbine (10) according to Claims 7 to 10,
**characterized in that** the floating ring (8a) of the floating ring seal (8) is attached on that side of the barrier medium wall (2, 3) which is oriented toward the rotor shaft (15) and the support ring (8b) of the floating ring seal (8) on the rotor shaft (15).

## Revendications

1. Système d'étanchéité (1) destiné à rendre étanche une fente d'étanchéité (12) entre un carter externe (11) et un arbre de rotor (15) d'un rotor (14) d'une turbine à vapeur (10), comprenant une paroi de fluide barrière (2, 3) servant à créer un espace de fluide barrière (4) entre l'arbre de rotor (15) et le carter externe (11) dans la zone située avant et/ou dans la fente d'étanchéité (12), la paroi de fluide barrière (2, 3) pouvant être fixée au carter externe (11), comprenant un orifice de fluide barrière (5) dans la paroi de fluide barrière (2, 3), servant à amener du fluide barrière purifié (6) de l'extérieur dans la chambre de fluide barrière (4) sous une première pression (P1), comprenant une garniture d'étanchéité d'arbre (7) servant à assurer l'étanchéité de la chambre de fluide barrière (4) par rapport à une deuxième chambre (13, 17) dans laquelle règne une deuxième pression (P2) inférieure à la première pression (P1), et une garniture d'étanchéité à anneau glissant (8) servant à assurer l'étanchéité de la chambre de fluide barrière (4) par rapport à une troisième chambre (13, 17) dans laquelle règne une troisième pression (P3) inférieure à la deuxième pression (P2), une conduite de fluide barrière (5b) étant placée au niveau de l'orifice de fluide barrière (5), pour établir une communication de fluide entre la chambre de fluide barrière (4) et un dispositif de purification (16) du système d'étanchéité (1), qui fournit le fluide barrière purifié (6).

2. Système d'étanchéité (1) selon la revendication 1,
**caractérisé en ce que** la garniture d'étanchéité à anneau glissant (8) peut être placée sur le côté tourné vers l'arbre de rotor (15) de la paroi de fluide barrière (2, 3) et de l'arbre de rotor (15).

3. Système d'étanchéité (1) selon l'une des revendications 1 ou 2,
**caractérisé en ce que** la garniture d'étanchéité à anneau glissant (8) comprend un anneau glissant (8a) et un contre-anneau (8b).

4. Système d'étanchéité (1) selon l'une des revendications précédentes,
**caractérisé en ce qu'**une soupape de fluide barrière (5a) est montée dans l'orifice de fluide barrière (5) ou dans la conduite de fluide barrière (5b).

5. Système d'étanchéité (1) selon l'une des revendications précédentes,
**caractérisé en ce que** la paroi de fluide barrière (2, 3) est réalisée en deux parties, les deux parois de fluide barrière (2, 3) pouvant être fixée l'une à l'autre de manière étanche.

6. Système d'étanchéité (1) selon la revendication 5,
**caractérisé en ce que** la garniture d'étanchéité d'arbre (7) est placée sur une première paroi de fluide barrière (2) et **en ce que** soit l'anneau glissant (8a) soit le contre-anneau (8b) de la garniture d'étanchéité à anneau glissant (8) est placé sur la deuxième paroi de fluide barrière (3).

7. Turbine à vapeur (10) comprenant un carter externe (11) et un rotor (14) avec un arbre de rotor (15), présentant au moins une fente d'étanchéité (12) entre le carter externe (11) et l'arbre de rotor (15),
**caractérisée en ce que** la turbine à vapeur (10) est dotée d'au moins un système d'étanchéité (1) selon l'une des revendications précédentes, destiné à rendre étanche la au moins une fente d'étanchéité (12).

8. Turbine à vapeur (10) selon la revendication 7,
**caractérisée en ce que** le carter externe (11) comporte des moyens de fixation permettant de fixer la paroi de fluide barrière (2, 3) du au moins un système d'étanchéité (1).

9. Turbine à vapeur (10) selon la revendication 7 ou 8,
**caractérisée en ce que** la paroi de fluide barrière (2, 3) est placée de manière étanche sur le côté tourné vers l'arbre de rotor (15) du carter externe (11).

10. Turbine à vapeur (10) selon la revendication 7 à 9,
**caractérisée en ce que** la garniture d'étanchéité d'arbre (7) assure l'étanchéité de la chambre de fluide barrière (4) par rapport à une deuxième chambre (13, 17) dans laquelle règne une deuxième pression (P2) inférieure à la première pression (P1), et **en ce que** la garniture d'étanchéité à anneau glissant (8) assure l'étanchéité de la chambre de fluide barrière (4) par rapport à une troisième chambre (13, 17) dans laquelle règne une troisième pression (P3) inférieure à la deuxième pression (P2).

11. Turbine à vapeur (10) selon la revendication 7 à 10,
**caractérisée en ce que** l'anneau glissant (8a) de la garniture d'étanchéité à anneau glissant (8) est fixé sur le côté tourné vers l'arbre de rotor (15) de la paroi de fluide barrière (2, 3) et le contre-anneau (8b) de la garniture d'étanchéité à anneau glissant (8) est fixé sur l'arbre de rotor (15).
